# FASCICULE DE BREVET EUROPEEN

(11) **EP 0 808 577 B1**
(45) Date de publication et mention de la délivrance du brevet: **13.11.2002**
(21) Numéro de dépôt: 96201351.2
(22) Date de dépôt: 21.05.1996
(51) Int. Cl.: A23G 9/28, A23G 9/20

(54) **Procédé et dispositif de fabrication de produits congelés aérés**
Verfahren und Vorrichtung zur Herstellung von lufthaltigen gefrorenen Produkten
Process and apparatus for producing aerated frozen products

(43) Date de publication de la demande: 26.11.1997
(73) Titulaire: SOCIETE DES PRODUITS NESTLE S.A., 1800 Vevey (CH)
(72) Inventeur: Fayard, Gilles, 1052 Le Mont S/Lausanne (CH); Groux, Michel John Arthur, 3438 Lauperswil (CH)
(74) Mandataire: Archambault, Jean

(56) Documents cités:
- FR-A- 2 616 043
- FR-A- 2 624 348
- US-A- 1 973 190
- US-A- 2 402 931
- US-A- 2 827 773
- US-A- 3 456 839
- C. MERCIER ET AL.: "EXTRUSION COOKING" 1989 , AMERICAN ASSOCIATION OF CEREAL CHEMISTS , ST. PAUL ,MINNESOTA USA XP002019547 913250 * Page 8, figure 5; page 93-94, figures 2, 3; page 123, figure 24. * * Page 163, figure 2; page 346, figure 2 *
- PATENT ABSTRACTS OF JAPAN vol. 5, no. 85 (C-57) [757] , 3 Juin 1981 & JP-A-56 029962 (TAKUZOU ICHIHARA), 25 Mars 1981,

## Description

L'invention a trait à un procédé de fabrication de produits congelés aérés et à un dispositif pour la mise en oeuvre du procédé.

Un procédé classique de fabrication de produits congelés aérés, notamment de crème glacée, comprend les opérations de mélange, d'homogénéisation, de pasteurisation, de congélation et de durcissement du mélange à glacer. L'aération du mélange ou foisonnement s'effectue lors de l'étape de congélation dans une proportion telle que le volume augmente de 70 à 120 %. A la sortie du dispositif de congélation (freezer), la température de la masse aérée est typiquement -5 à -6° C. Celle-ci est ensuite durcie à -40 à -45° C dans une chambre de durcissement, jusqu'à ce que la température du produit atteigne -18° C ou moins à coeur pour les produits en vrac ou -30° C pour les produits en barre extrudés.

On a cherché à abaisser la température de la masse à la sortie du dispositif de congélation (freezer), pour des raisons d'économie d'énergie et dans le but d'en améliorer la texture, par exemple dans le sens d'une plus grande onctuosité. On s'est cependant heurté avec les équipements classiques à des problèmes insurmontables de viscosité élevée de la masse de crème glacée à température en dessous de -7 à -8° C. Ces problèmes ont été en partie résolus en mettant en oeuvre deux freezers à surface raclée en série, le premier, classique, délivrant la crème glacée aérée à environ -7° C et le second, spécialement conçu pour traiter la masse hautement visqueuse de manière à abaisser sa température jusqu'à environ -10°C.

Dans le même ordre d'idées, EP-A-0561118 décrit un procédé en trois étapes pour produire de la crème glacée à température basse, jusqu'à environ -20° C. C'est une température de sortie où l'étape de durcissement peut être entièrement éliminée pour les produits en vrac et notablement raccourcie pour les produits extrudés. Dans la première étape, dite de préfoisonnement, on incorpore de l'air au mélange à glacer à température positive. Dans la seconde, on refroidit la masse aérée dans un échangeur à suface raclée, qui sort à environ -6° C. Au cours de la troisième, un dispositif à vis refroidit la masse à environ -20° C.

US-A-5024066 concerne un système à deux étages. Dans le premier a lieu un préfoisonnement au cours duquel on ajoute de l'air à la masse à glacer à température positive. Dans le second, on refroidit la masse aérée au moyen d'une vis d'archimède à surface rugueuse munie de couteaux racleurs à sa périphérie jusqu'à une température négative suffisamment basse pour assurer une texture stable de la masse congelée, ce qui permet d'entreposer directement les produits en chambre froide.

FR-A-2 616 043 concerne une installation de fabrication de produits foisonnés. US-A-2 402 931 divulgue une machine pour la production continue de glaces et C.Mercier et al. dans le "Extrusion Cooking" (1989) présentent quelques aspects intéressants de l'extrusion pour la fabrication de pain.

Le but de la présente invention est de réaliser les opérations de foisonnement et de refroidissement de la masse en une seule étape dans un appareil unique, plus facile à maitriser et de moindre encombrement que les dispositifs connus et ainsi de simplifier le procédé de congélation à basse température tout en tirant parti des avantages énergétique et de texture mentionnés précédemment.

L'invention concerne un procédé de fabrication de produits congelés aérés, dans lequel on mélange, on aére, on congèle, on refroidit une composition à glacer jusqu'à une température égale ou inférieure à -8° C et on la fait passer à travers une filière, caractérisé par le fait que ces opérations ont lieu en une seule étape dans un dispositif unique d'extrusion mono-vis situé dans un fourreau muni de moyens d'aération et de refroidissement.

On a constaté avec surprise qu'il est possible d'aérer, de mélanger, de refroidir et d'extruder une composition à glacer en une seule étape tout en obtenant un produit aéré congelé à basse température de texture améliorée et stable alors qu'on aurait pu craindre que la texture de la composition glacée ne soit endommagée lors du traitement dans un dispositif d'extrusion mono-vis. Celà ne va pas de soi, puisque les procédés connus prévoient que l'aération ait lieu préalablement au refroidissement dans un dispositif séparé et que le refroidissement conduisant à la congélation s'effectue au moins partiellement dans un dispositif muni de couteaux racleurs.

Pour mettre en oeuvre le procédé, on prépare de manière conventionnelle une composition pour crème glacée, crème glacée allégée en matière grasse ou sorbet à base, selon la recette, de lait, lait écrémé, crème, lait concentré, poudre de lait, huile de beurre à laquelle on ajoute du saccharose, glucose, dextrose de fruits, pulpe de fruits et des hydrocolloides stabilisants comme, par exemple, les carraghénates, alginates, la gomme de caroube, des émulsifiants comme, par exemple, les glycérides partiels et des arômes. Après mélange intime des ingrédients dans les proportions dictées par la recette, on pasteurise, refroidit, puis, le cas échéant on peut homogénéiser, de préférence à chaud dans des conditions poussées permettant une réduction de la taille moyenne des globules gras. Après refroidissement de l'homogénéisat à basse température, proche de 0° C, on peut laisser la composition mûrir un certain temps à cette température. L'homogénéisation et la maturation sont des étapes optionnelles.

Cette masse, le cas échéant homogénéisée et mûrie est désignée dans la suite de l'exposé par "masse à glacer". Elle est introduite, de préférence à environ 2-7°C dans un dispositif de congélation mono-vis qui sera décrit ci-après plus en détails, dans lequel elle est acheminée vers une zône d'injection d'air où elle est foisonnée à 0-150%, fortement refroidie, jusqu'à -8 à -20° C, puis forcée à travers une filière, la vis tournant à 100-600 tour/min.

Le travail dans le dispositif mono-vis s'effectue de manière surprenante sans cisaillement excessif, de sorte que la montée en pression n'excède pas environ 50 bar au niveau de la filière. Le produit sortant est caractérisé par un diamètre moyen des cristaux de glacé allant de 10 à 30 micron, ce qui est notablement plus bas que ce que l'on peut obtenir avec les freezers conventionnels. Il en résulte une texture améliorée dans le sens d'une meilleure onctuosité et d'une meilleure crémosité.

L'invention concerne également un dispositif pour la mise en oeuvre du procédé précédent, comprenant une vis sans fin, tournant dans un fourreau muni à l'une de ses extrémités d'une filière d'extrusion et à l'autre de moyens d'alimentation en composition à glacer et, dans une zone intermédiaire, de moyens d'alimentation en air, le fourreau étant pourvu d'un manchon où circulent des fluides frigorigènes.

La vis sans fin peut présenter des segments successifs où sa forme varie d'un segment à l'autre, par exemple du point de vue de l'orientation des filets et de leur pas. La configuration de la vis est choisie pour effectuer les opérations de transport, mélange, cisaillement et compression de la masse vers la filière et pour favoriser l'incorporation de gaz de manière à obtenir un foisonnement. On peut prévoir des zones intermédiaires de brassage, par exemple par des disques monolobes ou bilobes à orientation positive, ayant un effet de transport ou négative, ayant un effet de retour ou encore un segment à pas de vis inverse induisant un retour.

Le fourreau est muni de moyens de refroidissement constitués d'une double enveloppe avec, préférablement, un circuit de refroidissement autonome par segment, avec soupapes de contrôle du débit d'agent frigorigène ce qui permet une régulation individuelle de chaque segment en température. La vis peut elle aussi comporter un circuit de refroidissement interne.

L'air peut être injecté au moyen de débimètres par des conduits à différents niveaux du fourreau, et de préférence dans la seconde moitié de sa longueur, préférablement de chaque côté de celui-ci. On peut atteindre ainsi, 0 à 150 % et de préférence, 30 à 120 % de foisonnement.

La filière peut être à sortie horizontale ou verticale. La géométrie et le dimensionnement de la filière ou, le cas échéant, le diamètre et la longueur du conduit de sortie qui peut lui être associé sont prévus pour assurer une contre-pression de l'ordre de 4 à 50 bar et, de préférence de 4 à 25 bar. On peut régler la contre-pression au moyen, par exemple, d'une soupape à bille en aval du conduit en question, par exemple dans le cas d'une température de sortie du produit proche de la limite basse, auquel cas le diamètre du conduit de sortie doit être augmenté pour compenser la chute de pression due à la perte de charge provoquée par l'augmentation de la viscosité lorsque la température de la masse baisse. La filière peut, de préférence, être refroidie, par exemple au moyen d'un manchon où circule un fluide de refroidissement.

Le dispositif selon l'invention est décrit plus en détails ci-après en référence au dessin annexé, donné à titre d'exemple et dans lequel:

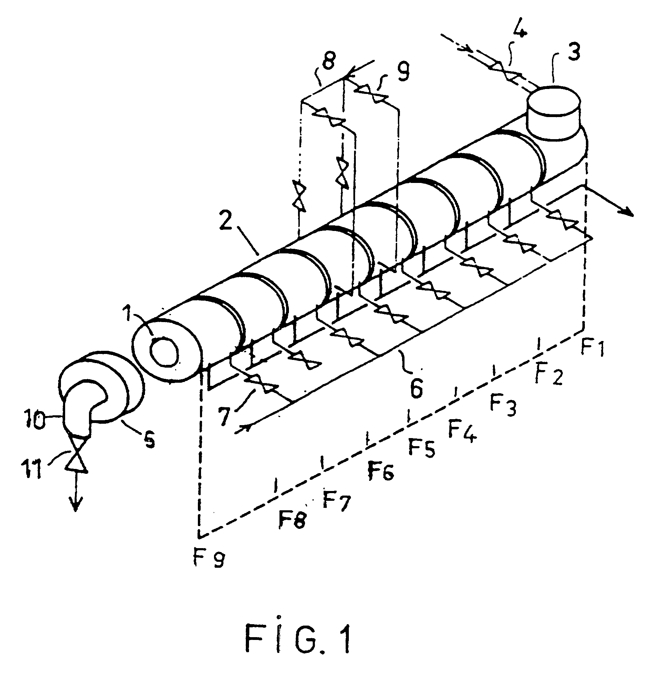

La figure 1 est une vue schématique en perspective éclatée du dispositif.

Comme on le voit à la figure 1, le dispositif comprend une vis d'extrusion 1, mobile en rotation autour de son axe et entraînée par un moteur non représenté. La vis est montée dans un fourreau 2, qui présente à son début un conduit 3 d'alimentation en composition à glacer pourvu d'une soupape de non retour 4 pour assurer l'étanchéité vis à vis de l'air et qui se termine par une filière 5 sous forme de plaque.

Le fourreau comprend neuf segments F1 à F9 de 100 mm de longueur, modulables du point de vue de la configuration de vis, auxquels sont associés des circuits de refroidissement 6 individuels par manchons correspondants parcourus par un mélange eau-alcool, avec réglage individuel du débit au moyen des vannes 7. L'aération a lieu par les arrivées d'air 8, de chaque côté du fourreau et l'air est injecté par piston muni d'un débimètre massique. Le débit d'air est réglé individuellement par des vannes 9.

Dans une variante non représentée, la filière5 est pourvue d'un manchon où circule également un fluide de refroidissement dont le débit peut être réglé individuellement.

A l'extrémité de sortie du fourreau 2 et de la filière 5, un conduit 10 sert de zone de pré-expansion. Le conduit 10 est pourvu d'une soupape à bille 11 pour contrôler la contre-pression et la durée de séjour de la masse dans le fourreau.

Soit L la longueur totale des segments de la vis qui représente la longueur active de cette vis et D son diamètre, le rapport L/D est de l'ordre de 30 à 60.

Le procédé selon l'invention est décrit plus en détails dans les exemples ci-après donnés à titre d'illustration. Les pourcentages et parties y sont en poids, sauf indication contraire.

### Exemple 1

On a préparé une composition à glacer de bas point de congélation contenant 8,5 % de graisse lactique (sous forme de crème à 35 % de matière grasse), 11 % de solides non gras du lait, 12 % de sucrose, 6,4 % de sirop de glucose (d'équivalent dextrose 40), 1 % de dextrose, 0,47 % de glycérides partiels à titre de stabilisants/émulsifiants et 0,4 % d'arôme de vanille. La teneur en solides totaux de la composition était 39,15 %, le solde étant représenté par l'eau. Le mélange a subi une homogénéisation en deux étages à 135, puis 35 bar, a été pasteurisé à 86° C pendant 30 s, refroidi à 4° C et entreposé 24 h à cette température. Cette composition a été introduite dans le dispositif dans les conditions opératoires indiquées ci-après:
- Configuration de la vis

| | | | | | | | | | |
|---|---|---|---|---|---|---|---|---|---|
| Segments | F1 | F2 | F3 | F4 | F5 | F6 | F7 | F8 | F9 |
| Type de vis | T | T/M | T/M | M/C | T | CO | M/CO | M/CO | CO |
| Avec T: Transport, M: Mélange, C: Cisaillement et CO: Compression | | | | | | | | | |

- Débit de produit entrant 8 kg/h, à 6° C.
- Injection d'air: en 9 des deux côtés dans F5 et F6, soit par 4 conduits avec un débit de 15 g/h.
- Vitesse de rotation des vis: 300 t/min.
- Refroidissement des zones F2 à F9 avec un liquide frigorigène à -26° C (température d'entrée)/-24,4° C (température de sortie), de débit 17 litres/min.
- Diamètre de la filière de sortie: 12 mm. La température de sortie du produit était -10,4° C et le foisonnement 40 %.

Les produits obtenus avaient une texture plus onctueuse et plus crémeuse que les produits fabriqués de manière conventionnelle à titre de référence.

### Exemple 2

Dans cet exemple, on a préparé des compositions pour sorbet de la manière suivante: A un mélange à 60° C de 0,8 % de stabilisants (gélatine, gomme de caroube), on a ajouté 29 % de sucre, 10 % de sirop de glucose et 35 % de purée de framboise non sucrée, un colorant et un arôme framboise ainsi qu'un acide de qualité alimentaire jusqu'à pH 3,2-3,4. La teneur en solides de la composition était de 30,30 %, le solde étant représenté par l'eau. On a homogénéisé le mélange à 72° C en un étage avec une pression de 50 bar, puis on l'a pasteurisé à 85° C pendant 30 min., refroidi à 4° C et laissé au repos au moins 4 h à cette température.

On a introduit cette composition à glacer dans le dispositif avec la même configuration des vis que celle de l'exemple 1. Les conditions opératoires étaient les mêmes que dans l'exemple 1, mis à part les suivantes:
- Injection d'air: en 9 des deux côtés dans F5 et F6, soit par 4 conduits avec un débit de 15 g/h.

La température de sortie du produit était -10,4° C et le foisonnement 40 %.

Dans les exemples précédents, on a décrit le procédé et l'appareil en rapport avec la fabrication de composition glacée sans spécifier que l'on pourrait traiter en même temps plusieurs crèmes glacées ou sorbets de parfums et couleurs différents, par co-extrusion et obtenir ainsi des produits composites, par exemple marbrés, contenant le cas échéant des annexes.

Bien entendu, le procédé est applicable à la fabrication de produits congelés du genre des mousses, crèmes et pâtes à tartiner sucrées ou encore salées, par exemple de fromage, légume, viande ou poisson ou des sauces ou sauces à salade. Dans ces cas, la flexibilité du procédé permet de moduler l'incorporation d'air dans la composition à glacer en fonction du degré de foisonnement plus ou moins grand souhaité en apport avec les caractéristiques des types de produits visés.

## Revendications

1. Procédé de fabrication de produits congelés aérés, dans lequel on mélange, on aére, on congèle, on refroidit une composition à glacer jusqu'à une température égale ou inférieure à -8° C et on la fait passer à travers une filière, **caractérisé par le fait que** ces opérations ont lieu en une seule étape dans un dispositif unique dans un dispositif unique d'extrusion mono-vis situé dans un fourreau muni de moyens d'aération et de refroidissement.

2. Procédé selon la revendication 1, **caractérisé par le fait que** l'on introduit la composition à glacer à 2-7° C dans le dispositif mono-vis, dans lequel la vis tourne à 100-600 tour/min, acheminée vers une zône d'injection d'air où elle est foisonnée à 0-150 %, fortement refroidie, jusqu'à -8 à -20° C, puis forcée à travers une filière.

3. Dispositif pour la mise en oeuvre du procédé selon l'une des revendications 1 et 2, comprenant une vis sans fin, placée dans un fourreau muni à l'une de ses extrémités d'une filière et à l'autre de moyens d'alimentation en composition à glacer et, dans une zone intermédiaire, de moyens d'alimentation en air, le fourreau étant pourvu d'un manchon où circulent des fluides frigorigènes.

4. Dispositif selon la revendication 3, **caractérisé par le fait que** la vis sans fin présente des segments successifs où sa forme varie d'un segment à l'autre, du point de vue de l'orientation des filets et de leur pas, que sa configuration est disposée pour effectuer les opérations de transport, mélange, cisaillement et compression de la masse vers la filière et pour favoriser l'incorporation de gaz de manière à obtenir un bon foisonnement.

5. Dispositif selon la revendication 3, **caractérisé par le fait que**, L étant la longueur totale des segments de la vis et D son diamètre, le rapport L/D est de l'ordre de 30-60 et que la vis comprend des zones intermédiaires de brassage par disques monolobes ou bilobes à orientation positive, ayant un effet de transport ou négative, ayant un effet de retour ou encore segment à pas de vis inverse induisant un retour.

6. Dispositif selon la revendication 3, **caractérisé par le fait que** le fourreau est muni de moyens de refroidissement constitués d'une double enveloppe avec un circuit de refroidissement autonome par segment, que la filière est, le cas échéant, munie de moyens de refroidissement, avec soupapes de contrôle du débit d'agent frigorigène ce qui permet une régulation individuelle de chaque segment et, le cas échéant, de la filière en température.

7. Dispositif selon la revendication 3, **caractérisé par le fait que** l'air est injecté par des conduits à différents niveaux du fourreau de la 1/2 aux 4/5 de sa longeur, préférablement de chaque côté de celui-ci.

## Patentansprüche

1. Verfahren zur Herstellung von gefrorenen Produkten mit Lufteinschlag, bei dem man eine zu gefrierende Zusammensetzung mischt, aufschlägt, gefriert, bis zu einer Temperatur gleich -8°C oder darunter kühlt und sie durch eine Düse leitet, **dadurch gekennzeichnet, dass** diese Arbeitsgänge in einem einzigen Schritt in einer einzigen Einschnecken-Extrusionsvorrichtung in einem mit Lufteinschlag- und Kühleinrichtungen versehenen Gehäuse stattfinden.

2. Verfahren nach Anspruch 1, **dadurch gekennzeichnet, dass** man die zu gefrierende Zusammensetzung mit 2-7°C in die Einschnekkenvorrichtung einführt, in der die Schnecke sich mit 100-600 U/min dreht, sie zu einer Lufteinspritzzone befördert, in der sie um 0-150% aufgeschlagen wird, sie stark kühlt, und zwar bis zu -8 bis -20°C, und sie dann durch eine Düse presst.

3. Vorrichtung zur Durchführung des Verfahrens nach einem der Ansprüche 1 und 2, die eine Schnecke aufweist, die in einem Gehäuse angeordnet ist, das an einem seiner Enden mit einer Düse und am anderen Ende mit Einrichtungen zur Befüllung mit zu gefrierender Zusammensetzung und in einem mittleren Bereich mit Einrichtungen zur Luftzufuhr versehen ist, wobei das Gehäuse mit einer Buchse versehen ist, in der Kältefluide strömen.

4. Vorrichtung nach Anspruch 3, **dadurch gekennzeichnet, dass** die Schnecke aufeinanderfolgende Segmente aufweist, in denen ihre Form hinsichtlich der Richtung des Gewindegangs und der Steigung des Gewindes von einem Segment zum anderen variiert, dass sie so ausgebildet ist, und dass die Arbeitsgänge der Beförderung, des Mischens, Scherens und Komprimierens der Masse auf die Düse zu durchgeführt werden und die Einarbeitung von Gas begünstigt wird, so dass man einen guten Aufschlag erreicht.

5. Vorrichtung nach Anspruch 3, **dadurch gekennzeichnet, dass** das Verhältnis L/D, wobei L die Gesamtlänge der Segmente der Schnecke und D ihr Durchmesser ist, etwa 30-60 beträgt und dass die Schnecke Zwischenzonen zum Rühren mit Hilfe von einflügeligen oder zweiflügeligen Scheiben mit positiver Ausrichtung mit Förderwirkung oder mit negativer Ausrichtung mit Rückförderwirkung oder ein Segment mit einer umgekehrten Schneckensteigung aufweist, das eine Rückförderung bewirkt.

6. Vorrichtung nach Anspruch 3, **dadurch gekennzeichnet, dass** das Gehäuse mit Kühleinrichtungen versehen ist, die aus einem doppelten Mantel mit einem autonomen Kühlkreis pro Segment bestehen, und dass die Düse ggf. mit Kühleinrichtungen mit Ventilen zur Steuerung des Kältemitteldurchsatzes versehen ist, was die individuelle Temperaturregelung jedes Segments und ggf. der Düse gestattet.

7. Vorrichtung nach Anspruch 3, **dadurch gekennzeichnet, dass** die Luft über Kanäle auf verschiedenen Höhen des Gehäuses zwischen der Hälfte und 4/5 seiner Länge vorzugsweise auf jeder Seite des Gehäuses eingespritzt wird.

## Claims

1. Process for manufacturing aerated frozen products, wherein a composition to be frozen is mixed, aerated, frozen and cooled to a temperature equal to or lower than -8°C and is passed through a die, **characterized in that** the operations take place in a single step in a single device in a single mono-screw extrusion device situated in a barrel provided with means for aeration and cooling.

2. Process according to claim 1, **characterized in that** the composition to be frozen is introduced at 2-7°C into the mono-screw device, in which the screw revolves at 100-600 revolutions/min, is conveyed to an air injection zone where it is expanded by 0-150 %, strongly cooled to -8 to -20°C, and then forced through a die.

3. Device for putting the process according to claim 1 or 2 into practice, comprising an endless screw, placed in a barrel provided at one of its ends with a die and at the other end with means for feeding the composition to be frozen and, in an intermediate zone, means for feeding in air, the barrel being provided with a sleeve through which cooling fluids flow.

4. Device according to claim 3, **characterized in that** the endless screw has successive segments where its form varies from one segment to another, from the point of view of the orientation of the threads and their pitch, that the configuration is arranged so as to carry out operations for transporting, mixing, shearing and compressing the mass through the die and to encourage, optionally, the incorporation of gas so as to obtain good expansion.

5. Device according to claim 3, **characterized in that**, L being the total length of the segments of the screw and D its diameter, the ratio L/D is of the order of approximately 30-60 and that the screw includes intermediate zones for mixing by mono-lobe or bi-lobe discs with a positive orientation, having a transporting effect or with a negative orientation having a return effect or having a segment with an inverse screw pitch inducing a return.

6. Device according to claim 3, **characterized in that** the barrel is provided with means of cooling consisting of a double envelope with one self-contained cooling circuit per segment, that the die is optionally provided with means of cooling, with valves controlling the flow rate of the cooling agent which enables the temperature of each segment to be regulated individually and, optionally, the temperature of the die.

7. Device according to claim 3, **characterized in that** air is injected through pipes at various points into the barrel, from 1/2 to 4/5 of its length, preferably from each side thereof.
